# EUROPEAN PATENT SPECIFICATION

(11) **EP 2 946 082 B1**
(45) Date of publication and mention of the grant of the patent: **06.11.2019**
(21) Application number: 14741035.1
(22) Date of filing: 13.01.2014
(51) Int. Cl.: F01D 25/20, F02C 7/06, F04C 2/18, F04C 11/00

(54) **OIL PUMP TRANSFER PLATE**
ÖLPUMPENTRANSFERPLATTE
PLAQUE DE TRANSFERT DE POMPE À HUILE

(30) Priority: 18.01.2013 US 201361754236 P; 13.06.2013 US 201361834616 P
(43) Date of publication of application: 25.11.2015
(73) Proprietor: United Technologies Corporation, Farmington, CT 06032 (US)
(72) Inventor: STUTZ, Robert, C., Dobbs Ferry, NY 10522 (US); MASTRO, Jacob, Peter, Glastonbury, CO 06033 (US)
(74) Representative: Dehns
(86) International application number: PCT/US2014/011195
(87) International publication number: WO 2014/113300

(56) References cited:
- GB-A- 479 199
- JP-A- H06 323 261
- US-A- 4 631 009
- US-A- 6 058 694
- US-A1- 2005 238 502
- US-A1- 2009 191 078
- US-A1- 2010 213 010
- US-A1- 2011 314 830

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

Lubricant flow through the engine is required to maintain operating efficiency and temperature. Oil pumps are therefore utilized not only to supply fresh lubricant to a bearing or geared interface, but also to pump lubricant back to a reservoir. In some instances a pump may draw medium such as scavenge oil from separate sources. The separate sources may then converge at a common location such as the lubricant reservoir. However, it is not desirable to have a single pump draw from more than one source of lubricant.

Turbine engine manufacturers continue to seek further improvements to engine performance including improvements to thermal, transfer and propulsive efficiencies.

A pump having two pump rotors separated by a centre plate is disclosed in JP H06-323261 A.

### SUMMARY

The present invention provides a pump assembly as set forth in claim 1.

In an embodiment of the foregoing pump assembly, the first stage is in communication with a first fluid source, and the second stage is in communication with a second fluid source.

In a further embodiment of any of the foregoing pump assemblies, a pool of lubricant is provided in a dam provided by a portion of a first transfer plate surface horizontally below the transfer window, the first pumping means and the first cavity.

In a further embodiment of any of the foregoing pump assemblies, a pool of lubricant is provided in a dam provided by a portion of a second transfer plate surface horizontally below the transfer window, the second pumping means and the second cavity.

In a further embodiment of any of the foregoing pump assemblies, the pool of lubricant is provided during a dry first source condition.

In a further embodiment of any of the foregoing pump assemblies, the pool of lubricant is provided during a dry second source condition.

The invention also provides a lubricant supply system as set forth in claim 7.

In an embodiment of the foregoing lubricant supply system, the first inlet is in communication with the auxiliary passage and the second inlet is in communication with the primary passage.

In a further embodiment of any of the foregoing lubricant supply systems, a pool of lubricant is provided in a dam provided by a portion of a first transfer plate surface horizontally below the transfer window, the first pumping means and the first cavity.

In a further embodiment of any of the foregoing lubricant supply systems, a pool of lubricant is provided in a dam provided by a portion of a second transfer plate surface horizontally below the transfer window, the second pumping means and the second cavity.

In a further embodiment of any of the foregoing lubricant supply systems, the first stage is in communication with the auxiliary passage, and the second stage is in communication with the primary passage.

In a further embodiment of any of the foregoing lubricant supply systems, lubricant is pumped through the primary passage during a first condition, and lubricant is pumped through the auxiliary passage during a second condition. The second condition is a negative gravity event.

The invention also provides a gas turbine engine as set forth in claim 13.

In an embodiment of the foregoing gas turbine engine, the lubricant supply system provides lubricant to at least one of a geared architecture and a bearing assembly.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is an expanded schematic view of the example pump assembly.
Figure 3 is a second expanded schematic view of the example pump assembly.
Figure 4 is schematic view of the transfer plate and the first stage of the example pump assembly, illustrating the cut line for Figure 5.
Figure 5 is an interior view of the example pump assembly, located at the cut line displayed in Figure 4.
Figure 6 is a schematic view of a lubrication system for a geared architecture.

### DETAILED DESCRIPTION

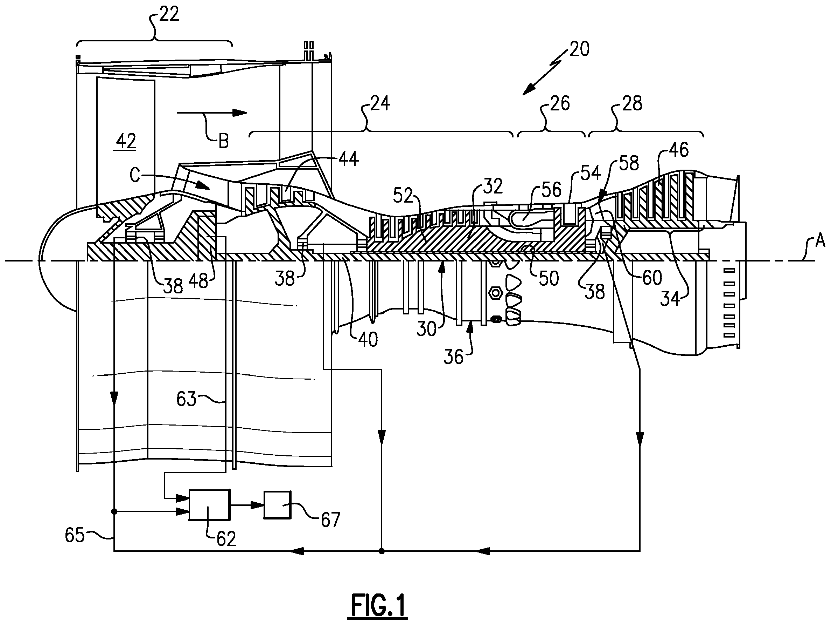

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by airflow through the bypass flow path B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (Ibf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5}. The "Low corrected fan tip speed", as disclosed herein according to one non-limiting embodiment, is less than about 1150 ft/second.

The example gas turbine engine includes the fan section 22 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

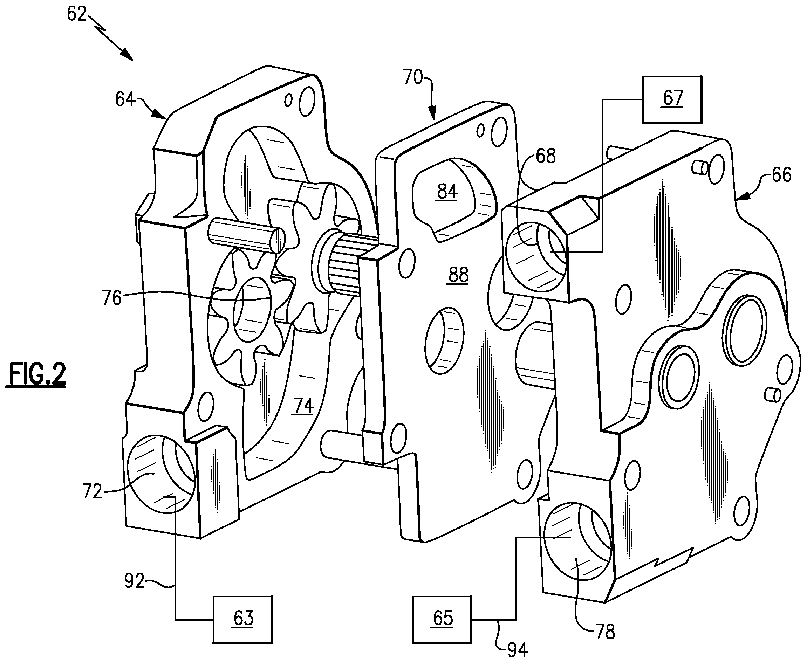

Referring to Figures 2-5, with continued reference to Figure 1, lubricant systems for a gas turbine engine not only supply lubricant to structures such as the geared architecture 48 and various bearing assemblies 38, but also circulate that lubricant out of the lubricated structures to maintain desired operating ranges and temperatures. Lubricant may be circulated through the lubricated structure and back to a reservoir. Lubricant may therefore be drawn from different sources and routed back to a common location.

An example pump assembly 62 is utilized to pump lubricant from separate sources 63, 65 to converge lubricant from the separate sources 63, 65 back to a common reservoir such as an oil tank 67. However, it is not desired to have a single stage of the pump 62 draw lubricant from different sources because one of those sources may dry up and create a non-uniform lubricant supply that would reduce pump efficiency. Therefore, the pump 62 includes different stages dedicated to each different source. When one source of lubricant or medium is not present, the other stages still function as designed.

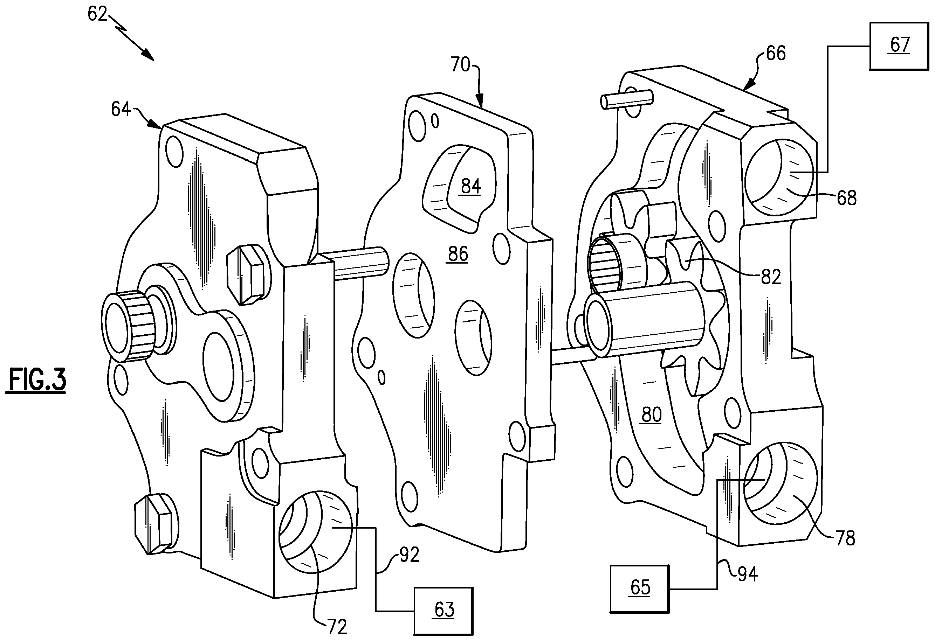

Referring to figures 2 and 3, the example pump assembly 62 includes different stages 64, 66 that receive and pump lubricant from different sources 63,65 to a common outlet 68. The pump assembly 62 includes a first stage 64 and a second stage 66 separated by a transfer plate 70. As shown schematically in figure 2, the first stage includes a first inlet 72 in communication with a first cavity 74, and a first pumping means 76 is contained within the first cavity 74. The first inlet 72 is in communication with source 63. The second stage 66 includes a second inlet 78 in communication with a second cavity 80, and a second pumping means 82 contained within the second cavity 80. The second inlet 78 is in communication with source 65.

The example pumping means includes first and second sets of gear teeth 76, 82. Each stage 64, 66 exhausts lubricant or other pumped medium through a common combined outlet 68, which may be located in either of the first stage 64 or second stage 66. The common outlet 68 is in fluid communication with both the first stage 64 and second stage 66. The outlet 68 may further be in communication with a reservoir, such as the oil tank 67.

Sealing between stages 64, 66 is provided to prevent a dry stage from affecting operation of the other operating stage. Sealing is accomplished by ensuring that the communication window 84 provided in the transfer plate 70 is horizontally above the gear teeth 76 and 82 (figures 2 and 3) of the non-utilized or dry stage, which may be the first stage 64 or the second stage 66.

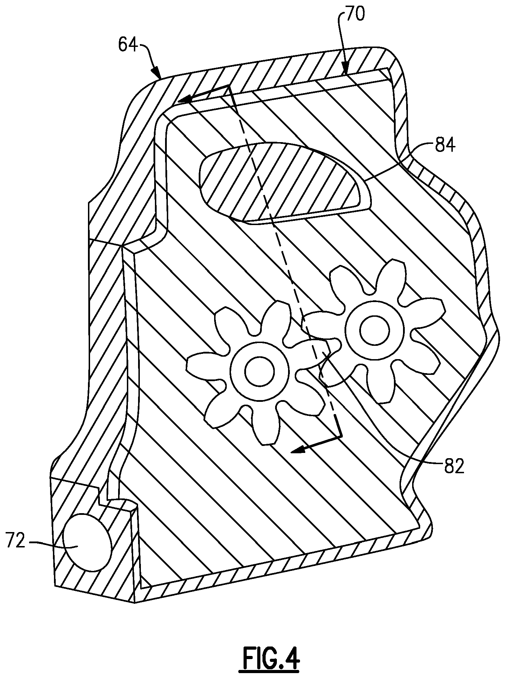

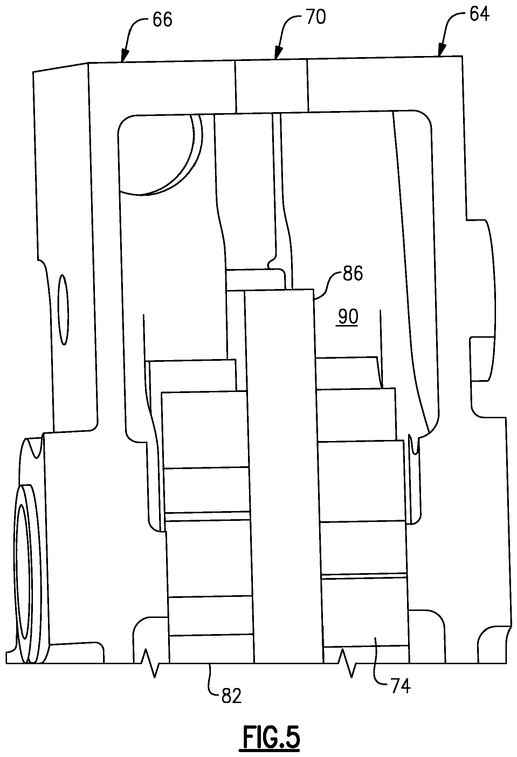

In the disclosed example, the first stage 64 is the non-utilized stage. As shown schematically in figures 4 and 5, locating the communication window 84 horizontally above the gear teeth 76 that provide pumping allows a pool of oil 90 to be provided in the non-utilized first stage 64 that seals all of the leakage paths. In the example, this pool 90 forms a dam of lubricant located horizontally below the transfer window 84, surrounded by the transfer plate surface 86 and the first cavity 74, and on top of the first pumping means 76. Leakage paths are not desired, as any leakage path can reduce performance and possibly damage the stage in use.

If the second stage 66 were the non-utilized stage, a pool may form a dam of lubricant located horizontally below the transfer window 84, surrounded by the transfer plate surface 88 and the second cavity 80, and on top of the second pumping means 82.

As appreciated, although two (2) stages are shown, the example pump assembly 62 may include more than two (2) stages separated by an additional transfer plate 70 to communicate lubricant through a common exhaust opening.

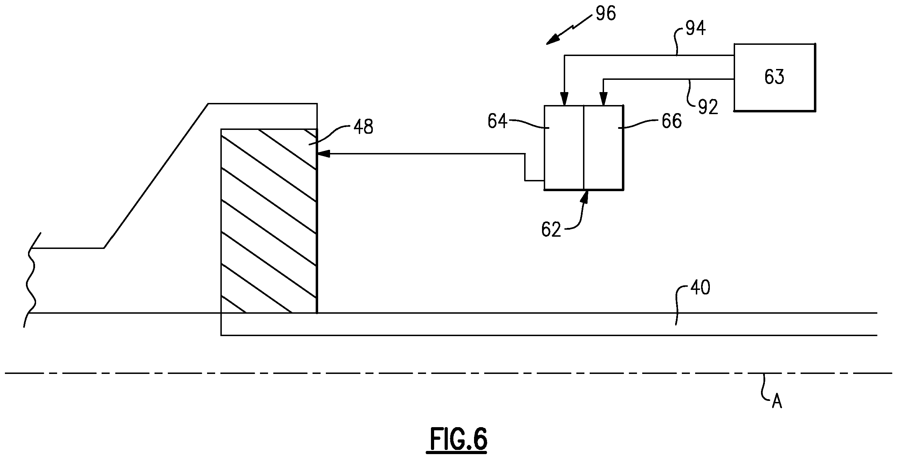

Referring to Figure 6, the example pump 62 may be utilized in applications where there is a high probability that at least one of the stages will not have lubricant or medium to pump. In one example, a lubricant supply system 96 to the geared architecture 48, the first stage 64 is provided to supply lubricant during a negative gravity event and the second stage 66 is provided for use during normal operation. Accordingly, one stage remains unused and does not pump lubricant during normal operation. Thus, the first stage 64 may be in communication with source 63 through an auxiliary passage 92, while second stage 66 is in communication with source 65 through a primary passage 94. The example pump 62 provides the oil dam in the first stage 64 during normal operation to seal the first stage 64. The sealing of the first stage 64 provides for operation of the second stage 66 during normal use while maintaining the first stage 64 for operation when required. Accordingly, by sealing the unused stage, the example pump 62 functions as desired during normal operation and during negative gravity events.

As appreciated, example pump assembly 62 could provide a lubricant system to other engine 20 components, such as bearing assembly 38.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A pump assembly (62) comprising:
a first stage (64) including a first inlet (72) in communication with a first cavity (74), and a first pumping means (76) disposed within the first cavity (74);
a second stage (66) including a second inlet (78) in communication with a second cavity (80), an outlet (68) in communication with both the first and the second cavity (74, 80), and a second pumping means (82) disposed within the second cavity (80); and
a transfer plate (70) disposed between the first stage (64) and the second stage (66), the transfer plate (70) including a transfer window (84);
**characterised in that** the entire transfer window (84) is disposed horizontally above the first pumping means (76) and the second pumping means (82).

2. The pump assembly of claim 1, wherein the first stage (64) is in communication with a first fluid source (63), and the second stage (66) is in communication with a second fluid source (65).

3. The pump assembly of claim 2, wherein a pool of lubricant (90) is provided in a dam provided by a portion of a first transfer plate surface (86) horizontally below the transfer window (84), the first pumping means (76) and the first cavity (74).

4. The pump assembly of claim 2, wherein a pool of lubricant (90) is provided in a dam provided by a portion of a second transfer plate surface (86) horizontally below the transfer window (84), the second pumping means (76) and the second cavity (74).

5. The pump assembly of claim 3, wherein the pool of lubricant (90) is provided during a dry first source condition.

6. The pump assembly of claim 4, wherein the pool of lubricant (90) is provided during a dry second source condition.

7. A lubricant supply system comprising:
a primary passage (94) and an auxiliary passage (92); and
a pump assembly (62) of any preceding claim.

8. The lubricant supply system of claim 7, wherein the first inlet (72) is in communication with the auxiliary passage (92) and the second inlet (78) is in communication with the primary passage (94).

9. The lubricant supply system of claim 8 as dependent directly or indirectly upon claim 3, wherein the pool (90) of lubricant is provided during a dry auxiliary system condition.

10. The lubricant supply system of claim 8 as dependent directly or indirectly upon claim 4, wherein the pool of lubricant (90) is provided during a dry primary system condition.

11. The lubricant supply system of any of claims 7 to 10, wherein the first stage (64) is in communication with the auxiliary passage (92), and the second stage (66) is in communication with the primary passage (94).

12. The lubricant supply system of claim 11, wherein lubricant is pumped through the primary passage (94) during a first condition, and lubricant is pumped through the auxiliary passage (92) during a second condition, wherein the second condition is a negative gravity event.

13. A gas turbine engine comprising a lubricant supply system of any of claims 7 to 12.

14. The gas turbine engine of claim 13, wherein the lubricant supply system provides lubricant to at least one of a geared architecture (46) and a bearing assembly (38).

## Patentansprüche

1. Pumpenbaugruppe (62), umfassend:
eine erste Stufe (64), die einen ersten Einlass (72) in Kommunikation mit einem ersten Hohlraum (74) und ein erstes Pumpenmittel (76) beinhaltet, das innerhalb des ersten Hohlraums (74) angeordnet ist;
eine zweite Stufe (66), die einen zweiten Einlass (78) in Kommunikation mit einem zweiten Hohlraum (80), einen Auslass (68) in Kommunikation sowohl mit dem ersten als auch dem zweiten Hohlraum (74, 80) und ein zweites Pumpenmittel (82) beinhaltet, das innerhalb des zweiten Hohlraums (80) angeordnet ist; und
eine Transferplatte (70), die zwischen der ersten Stufe (64) und der zweiten Stufe (66) angeordnet ist, wobei die Transferplatte (70) ein Transferfenster (84) beinhaltet;
**dadurch gekennzeichnet, dass** das vollständige Transferfenster (84) horizontal über dem ersten Pumpenmittel (76) und dem zweiten Pumpenmittel (82) angeordnet ist.

2. Pumpenbaugruppe nach Anspruch 1, wobei die erste Stufe (64) in Kommunikation mit einer ersten Fluidquelle (63) ist und die zweite Stufe (66) in Kommunikation mit einer zweiten Fluidquelle (65) ist.

3. Pumpenbaugruppe nach Anspruch 2, wobei ein Schmiermittelpool (90) in einem Damm bereitgestellt ist, der durch einen Abschnitt einer ersten Transferplattenfläche (86) horizontal unter dem Transferfenster (84), dem ersten Pumpenmittel (76) und dem ersten Hohlraum (74) bereitgestellt ist.

4. Pumpenbaugruppe nach Anspruch 2, wobei ein Schmiermittelpool (90) in einem Damm bereitgestellt ist, der durch einen Abschnitt einer zweiten Transferplattenfläche (86) horizontal unter dem Transferfenster (84), dem zweiten Pumpenmittel (76) und dem zweiten Hohlraum (74) bereitgestellt ist.

5. Pumpenbaugruppe nach Anspruch 3, wobei der Schmiermittelpool (90) während eines trockenen ersten Quellenzustands bereitgestellt ist.

6. Pumpenbaugruppe nach Anspruch 4, wobei der Schmiermittelpool (90) während eines trockenen zweiten Quellenzustands bereitgestellt ist.

7. Schmiermittelzufuhrsystem, umfassend:
einen primären Durchlass (94) und einen zusätzlichen Durchlass (92); und
eine Pumpenbaugruppe (62) nach einem vorhergehenden Anspruch.

8. Schmiermittelzufuhrsystem nach Anspruch 7, wobei der erste Einlass (72) in Kommunikation mit dem zusätzlichen Durchlass (92) ist und der zweite Einlass (78) in Kommunikation mit dem primären Durchlass (94) ist.

9. Schmiermittelzufuhrsystem nach Anspruch 8, soweit direkt oder indirekt von Anspruch 3 abhängig, wobei der Schmiermittelpool (90) während eines trockenen zusätzlichen Systemzustands bereitgestellt ist.

10. Schmiermittelzufuhrsystem nach Anspruch 8, soweit direkt oder indirekt von Anspruch 4 abhängig, wobei der Schmiermittelpool (90) während eines trockenen primären Systemzustands bereitgestellt ist.

11. Schmiermittelzufuhrsystem nach einem der Ansprüche 7 bis 10, wobei die erste Stufe (64) in Kommunikation mit dem zusätzlichen Durchlass (92) ist und die zweite Stufe (66) in Kommunikation mit dem primären Durchlass (94) ist.

12. Schmiermittelzufuhrsystem nach Anspruch 11, wobei während eines ersten Zustands Schmiermittel durch den primären Durchlass (94) gepumpt wird und während eines zweiten Zustands Schmiermittel durch den zusätzlichen Durchlass (92) gepumpt wird, wobei der zweite Zustand ein negatives Schwerkraftereignis ist.

13. Gasturbinenmotor, umfassend ein Schmiermittelzufuhrsystem nach einem der Ansprüche 7 bis 12.

14. Gasturbinenmotor nach Anspruch 13, wobei das Schmiermittelzufuhrsystem zumindest einem von einer Getriebearchitektur (46) und einer Lagerbaugruppe (38) Schmiermittel bereitstellt.

## Revendications

1. Ensemble pompe (62) comprenant :
un premier étage (64) comportant une première entrée (72) en communication avec une première cavité (74) et un premier moyen de pompage (76) disposé à l'intérieur de la première cavité (74) ;
un second étage (66) comportant une seconde entrée (78) en communication avec une seconde cavité (80), une sortie (68) en communication avec la première et la seconde cavité (74, 80) et un second moyen de pompage (82) disposé dans la seconde cavité (80) ; et
une plaque de transfert (70) disposée entre le premier étage (64) et le second étage (66), la plaque de transfert (70) comportant une fenêtre de transfert (84) ;
**caractérisé en ce que** la totalité de la fenêtre de transfert (84) est disposée horizontalement au-dessus du premier moyen de pompage (76) et du second moyen de pompage (82) .

2. Ensemble pompe selon la revendication 1, dans lequel le premier étage (64) est en communication avec une première source de fluide (63) et le second étage (66) est en communication avec une seconde source de fluide (65).

3. Ensemble pompe selon la revendication 2, dans lequel un réservoir de lubrifiant (90) est fourni dans un barrage constitué d'une partie d'une première surface de plaque de transfert (86) horizontalement en dessous de la fenêtre de transfert (84), du premier moyen de pompage (76) et de la première cavité (74).

4. Ensemble pompe selon la revendication 2, dans lequel un réservoir de lubrifiant (90) est fourni dans un barrage constitué d'une partie d'une seconde surface de plaque de transfert (86) horizontalement en dessous de la fenêtre de transfert (84), du second moyen de pompage (76) et de la seconde cavité (74).

5. Ensemble pompe selon la revendication 3, dans lequel le réservoir de lubrifiant (90) est fourni dans un premier état de source sec.

6. Ensemble pompe selon la revendication 4, dans lequel le réservoir de lubrifiant (90) est fourni dans un second état de source sec.

7. Un système d'alimentation en lubrifiant comprenant :
un passage primaire (94) et un passage auxiliaire (92) ; et
un ensemble pompe (62) selon une quelconque revendication précédente.

8. Système d'alimentation en lubrifiant selon la revendication 7, dans lequel la première entrée (72) est en communication avec le passage auxiliaire (92) et la seconde entrée (78) est en communication avec le passage primaire (94) .

9. Système d'alimentation en lubrifiant selon la revendication 8, lorsqu'elle dépend directement ou indirectement de la revendication 3, dans lequel le réservoir (90) de lubrifiant est fourni dans un état de système auxiliaire sec.

10. Système d'alimentation en lubrifiant selon la revendication 8, lorsqu'elle dépend directement ou indirectement de la revendication 4, dans lequel le réservoir de lubrifiant (90) est fourni dans un état de système primaire sec.

11. Système d'alimentation en lubrifiant selon l'une quelconque des revendications 7 à 10, dans lequel le premier étage (64) est en communication avec le passage auxiliaire (92) et le second étage (66) est en communication avec le passage primaire (94).

12. Système d'alimentation en lubrifiant selon la revendication 11, dans lequel le lubrifiant est pompé à travers le passage primaire (94) dans un premier état, et le lubrifiant est pompé à travers le passage auxiliaire (92) dans un second état, dans lequel le second état est un événement de gravité négative.

13. Moteur à turbine à gaz comprenant un système d'alimentation en lubrifiant selon l'une quelconque des revendications 7 à 12.

14. Moteur à turbine à gaz selon la revendication 13, dans lequel le système d'alimentation en lubrifiant fournit du lubrifiant à au moins l'un d'une architecture à engrenages (46) et d'un ensemble palier (38).
